# EUROPEAN PATENT APPLICATION

(11) **EP 4 797 302 A1**
(43) Date of publication of application: **26.08.2026**
(21) Application number: 25806761.0
(22) Date of filing: 23.04.2025
(51) Int. Cl.: H01G 11/86

(54) **LITHIUM PLATING METHOD FOR REFERENCE ELECTRODE IN LITHIUM-ION SUPERCAPACITOR, AND USE THEREOF**

(30) Priority: 20.05.2024 CN 202410623726
(71) Applicant: Zhongtian Energy Storage Technology Co., Ltd, Nantong, Jiangsu 226000 (CN); Jiangsu Zhongtian Technology Co., Ltd., Nantong, Jiangsu 226463 (CN)
(72) Inventor: LI, Lanxin, Nantong, Jiangsu 226000 (CN); MIAO, Yonghua, Nantong, Jiangsu 226000 (CN); REN, Dawei, Nantong, Jiangsu 226000 (CN); WU, Wenjing, Nantong, Jiangsu 226000 (CN); SHI, Weibo, Nantong, Jiangsu 226000 (CN); YANG, Wei, Nantong, Jiangsu 226000 (CN); LIU, Weigang, Nantong, Jiangsu 226000 (CN)
(74) Representative: Lanchava, Bakuri
(86) International application number: PCT/CN2025/090707
(87) International publication number: WO 2025/241822

(57) **Abstract**

The present invention relates to the technical field of lithium-ion supercapacitors. Provided are a lithium plating method for a reference electrode in a lithium-ion supercapacitor, and the use thereof. A reference electrode is made of a copper wire. The method comprises: performing continuous lithium plating on a copper wire by means of using three currents that decrease stepwise. The continuous lithium plating comprises: performing lithium plating under a first constant current, then performing lithium plating under a second constant current, and then performing lithium plating under a third constant current, wherein the current values of the first constant current, the second constant current and the third constant current decrease in sequence. In the present invention, by performing step-by-step lithium plating on a reference copper wire by means of a stepwise current decreasing method, a lithium-plated layer can be made denser and more stable while shortening the overall lithium plating time, thus improving the stability of a reference electrode. Furthermore, without damaging the structure of a lithium-ion supercapacitor, the reference electrode can be used for providing reliable criteria for determining whether the capacity design of a hard carbon anode and the N/P ratio design of the lithium-ion supercapacitor are rational.

## Description

### Technical Field

The present invention relates to the technical field of lithium-ion supercapacitors and specifically to a lithium plating method for a reference electrode in a lithium-ion supercapacitor.

### Background Art

Lithium-ion supercapacitors are products that combine the characteristics of lithium-ion batteries and supercapacitors, with the advantages of long cycle life, good rate performance, and high energy density, and have been widely used.

With regard to lithium-ion supercapacitors, hereinafter referred to as lithium supercapacitors, its positive electrode is generally made of a mixture of battery materials and porous carbon and its negative electrode is made of fast-charging carbon materials, most commonly made of hard carbon materials. The lithium storage mechanism of hard carbon can be classified as adsorption lithium storage, interlayer intercalation lithium storage and spatial pore lithium storage. When designing lithium supercapacitors, the aim is to maximize utilization of adsorption lithium storage capacity of hard carbon, reduce the use of the capacity with poor reversibility, and thus improve the cycle life at high-rate charging/discharging.

It is difficult to directly determine whether the capacity design of the hard-carbon negative electrode is reasonable, and analysis is generally performed through disassembly. However, disassembly may destroy the lithium supercapacitor structure, and the hard carbon presents black in lithiation/delithiation status, which also poses difficulties to analysis and judgment. Therefore, a three-electrode evaluation system is introduced, so that the reference electrode can monitor and test the potential versus lithium of the positive and negative electrodes in different charge-discharge ranges without damaging the lithium supercapacitor structure, providing reliable criteria for judging whether the capacity design of hard-carbon negative electrodes and the N/P ratio design of lithium supercapacitor are rational.

At present, the commonly used materials for reference electrode include Pt, Ag, Au, Li, etc., but these materials are costly and unstable, and can interfere with electrical signals and distort the results. In contrast, copper with lower cost is a more ideal reference electrode material, and generally exists in the form of copper foil/copper wire. The copper foil has a large area, can slow down the dissolution of lithium in the electrolyte and improve the stability of the reference electrode. However, at the same time, the uneven current distribution on the foil will lead to different collection of WE potential and CE potential, resulting in distorted results. It can also block the transmission of Li⁺, leading to the formation of dead zones in the corresponding areas and causing capacity loss of the lithium supercapacitor. Although ultra fine copper wire can solve the above problems, improve the reliability of test results, and have a relatively small impact on lithium supercapacitor, it is difficult to guarantee the stability of the process for plating lithium on copper wire.

### Summary of the Invention

The preset invention provides a lithium plating method for reference electrode in lithium-ion supercapacitor and use thereof, so as to solve the defects of complex lithium plating process and insufficient stability occurring when the copper wire is used to prepare reference electrode in prior art.

In a first aspect, the present invention provides a lithium plating method for reference electrode in lithium-ion supercapacitor, the reference electrode is made of copper wire, the lithium plating method comprises performing continuous lithium plating on the copper wire with three stages of currents that decrease stepwise.

The continuous lithium plating comprises plating lithium at a first constant current, then plating lithium at a second constant current, and then plating lithium at a third constant current, wherein the current values of the first constant current, the second constant current and the third constant current decrease in sequence.

Preferably, continuous lithium plating comprises plating lithium at a constant current ranging from 0.2 to 0.1mA, then plating lithium at a constant current ranging from 0.1 to 0.05 mA, and then plating lithium at a constant current ranging from 0.05 to 0.01 mA, wherein the values of adjacent two stages of constant currents are different.

Further preferably, continuous lithium plating comprises plating lithium for more than 2 hours at a constant current ranging from 0.2 to 0.1mA, then plating lithium for more than 2 hours at a constant current ranging from 0.1 to 0.05mA, and then plating lithium continuously for more than 4 hours at a constant current ranging from 0.05 to 0.01 mA.

According to the lithium plating method for reference electrode in lithium-ion supercapacitor provided by the present invention, the copper wire has a diameter ranging from 10 to 50 µm and a length ranging from 80 to 100 mm.

According to the lithium plating method for reference electrode in lithium-ion supercapacitor provided by the present invention, the lithium-ion supercapacitor including a positive electrode plate, a negative electrode plate and copper wire is assembled at first and then fully charged, and then lithium ions on the negative electrode plate are used as lithium source for performing continuous lithium plating.

According to the lithium plating method for reference electrode in lithium-ion supercapacitor provided by the present invention, the assembling comprises: welding the copper wire to a nickel tab;
The nickel tab and negative electrode tab led out from the negative electrode plate are connected to an electrochemical workstation to perform continuous lithium plating.

According to the lithium plating method for reference electrode in lithium-ion supercapacitor provided by the present invention, the copper wire is completely wrapped with a diaphragm before performing the assembling.

According to the lithium plating method for reference electrode in lithium-ion supercapacitor provided by the present invention, said assembling comprises alternately stacking the positive electrode plate and the negative electrode plate and separating the positive electrode plate from the negative electrode plate with the diaphragm, placing the copper wire completely wrapped with the diaphragm between the negative electrode plate and the diaphragm in the middle to form a battery cell.

According to the lithium plating method for reference electrode in lithium-ion supercapacitor provided by the present invention, said assembling further comprises:
The positive electrode plate is led out from a positive electrode tab;
The negative electrode plate is led out from the negative electrode tab;
The battery cell, the positive electrode tab, the negative electrode tab and the nickel tab are heat-sealed and fixed with aluminum-plastic casing film, subjected to liquid injection, aging and formation, and then fully charged;
The copper wire is completely wrapped by the diaphragm on its surface in the battery cell.

In a second aspect, the present invention further provides a lithium-ion supercapacitor with a three-electrode evaluation system, which is prepared with the lithium plating method as described above.

In a third aspect, the present invention further provides an evaluation method for the capacity design of a hard carbon negative electrode or N/P ratio design in the lithium-ion supercapacitor, wherein the reference electrode in lithium-ion supercapacitor prepared with the lithium plating method as described above is used.

### Beneficial Effects

The present invention provides the lithium plating method for reference electrode in lithium-ion supercapacitor and the use thereof, and by performing stepwise lithium plating on the reference copper wire with a stepwise decreasing current method, not only the overall lithium plating time is shortened but also the lithium plating layer becomes denser and more stable, thereby improving the stability of the reference electrode.

Furthermore, it is possible to utilize reference electrode to monitor and test the potential versus lithium of the positive and negative electrodes in different charge-discharge range without damaging the structure of lithium ion supercapacitor, providing reliable criteria for judging whether the capacity design of hard carbon negative electrode and the N/P ratio design of lithium supercapacitor are rational.

### Description of Drawings

In order to illustrate the technical solutions in the present invention or prior art more clearly, hereunder accompanying drawings to be used in the description of examples or prior art will be briefly introduced. It is obvious that the accompanying drawings in the following description are some examples of the present invention and those of ordinary skills in the art can obtain other drawings based on these drawings without exercising any creative effort.
FIG. 1 is a schematic structural diagram of the lithium-ion supercapacitor with three-electrode system provided in Embodiment 1 of the present invention;
FIG. 2 is a potential change curve of negative electrode vs. reference electrode of the lithium-ion supercapacitor with three-electrode system provided in Embodiment 1 of the present invention during charge-discharge cycles;
FIG. 3 is a potential change curve of negative electrode vs. reference electrode of the lithium-ion supercapacitor with three-electrode system provided in Embodiment 1 of the present invention during charge-discharge cycles;
FIG. 4 is a potential change curve of negative electrode vs. reference electrode of the lithium-ion supercapacitor with three-electrode system provided in Embodiment 2 of the present invention during charge-discharge cycles;
FIG. 5 is a potential versus lithium change curve of positive and negative electrodes of the lithium-ion supercapacitor with three-electrode system provided in Embodiment 1 of the present invention during charge-discharge cycles in a voltage range of 4.2 to 2.5V; and
FIG. 6 is a potential versus lithium change curve of positive and negative electrodes of the lithium-ion supercapacitor with three-electrode system provided in Embodiment 1 of the present invention during charge-discharge cycles in a voltage range of 4.0 to 2.8V;
Wherein, 1 - battery cell; 2 - aluminum-plastic casing film; 3 - negative electrode tab; 4 - nickel tab; 5 - positive electrode tab; 6 - adhesive tape; 7 - diaphragm; 8 - copper wire.

### Embodiments

To make the objectives, technical solutions and advantages of the present invention clearer, hereunder technical solutions of the present invention will be clearly and fully described in conjunction with the accompanying drawings of the present invention. It is obvious that the embodiments as described herein are a part of embodiments of the present invention, not all embodiments. All other embodiments obtained by those of ordinary skills in the art based on the embodiments of the present invention without expending creative work all belong to the protection scope of the present invention.

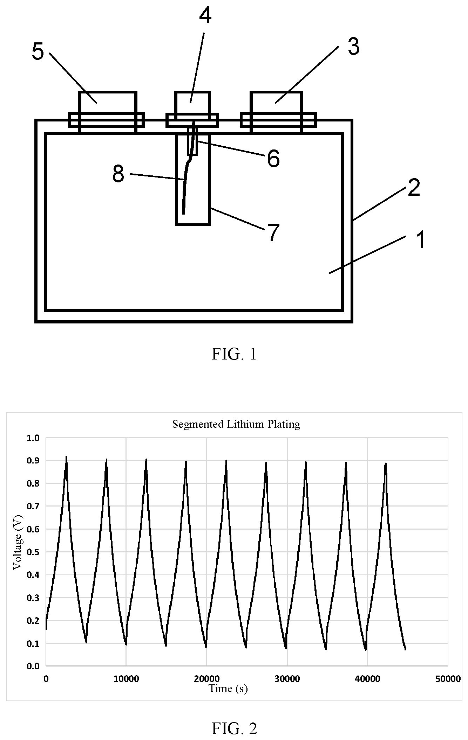

Hereunder, the lithium plating method for the reference electrode in the lithium-ion supercapacitor in the present invention is described with reference to Figs. 1-6.

Specifically, the embodiment of the present invention firstly provides a lithium plating method for a reference electrode in a lithium-ion supercapacitor, the reference electrode is made of copper wire, and the lithium plating method comprises performing continuous lithium plating on the copper wire with three stages of currents that decrease stepwise.

The continuous lithium plating comprises plating lithium at a first constant current, then plating lithium at a second constant current, and then plating lithium at a third constant current, wherein the current values of the first constant current, the second constant current and the third constant current decrease in sequence.

During continuous lithium plating in the present invention, the current is not interrupted.

The present invention has found that when the constant current method is used for plating lithium on copper wire, a larger current will form a thicker coating, which increases the risk of lithium deposition and makes it difficult to control the stability of lithium plating. Based on this, the present invention proposes to use three stages of currents that decrease stepwise for performing continuous lithium plating on the copper wire. Compared with other stepwise processes such as performing lithium plating with multiple stages of currents that increase in section, this process not only reduces the risk of lithium deposition, but also achieves a denser lithium plating layer, significantly improving the stability of the reference electrode.

In some embodiments of the present invention, said continuous lithium plating comprises plating lithium at a constant current ranging from 0.2 to 0.1mA, then plating lithium at a constant current ranging from 0.1 to 0.05mA, and then plating lithium at a constant current ranging from 0.05 to 0.01mA, wherein the values of adjacent stages of constant currents are different.

In some embodiments of the present invention, said continuous lithium plating comprises plating lithium for more than 2 hours at a constant current ranging from 0.2 to 0.1mA, then plating lithium for more than 2 hours at a constant current ranging from 0.1 to 0.05mA, and then plating lithium continuously for more than 4 hours at a constant current ranging from 0.05 to 0.01mA.

Preferably, said continuous lithium plating comprises plating lithium for 2-4 hours at a constant current ranging from 0.2 to 0.1mA, then plating lithium for 2-4 hours at a constant current ranging from 0.1 to 0.05mA, and then plating lithium continuously for 4-8 hours at a constant current ranging from 0.05 to 0.01mA.

As mentioned above, when the copper wire is plated with lithium by using the constant current method, the current magnitude affects the structure of the plated layer. The present invention has found through experiments that performing lithium plating with the above current parameters is more conducive to improving the stability of the reference electrode.

In some embodiments of the present invention, the copper wire has a diameter ranging from 10 to 50 µm and a length ranging from 80 to 100 mm.

In some embodiments of the present invention, the lithium-ion supercapacitor including a positive electrode plate, a negative electrode plate and copper wire is first assembled and then fully charged, and then lithium ions on the negative electrode plate is used as lithium source for performing continuous lithium plating.

In some embodiments of the present invention, said assembling comprises welding the copper wire to a nickel tab;
The nickel tab and the negative electrode tab led out from the negative electrode plate are connected to an electrochemical workstation to perform continuous lithium plating.

In some embodiments of the present invention, the copper wire is completely wrapped with a diaphragm and then the assembling is performed.

In some embodiments of the present invention, said assembling comprises alternately stacking the positive electrode plate and the negative electrode plate and separating the positive electrode plate from the negative electrode plate with the diaphragm, placing the copper wire completely wrapped with the diaphragm between the negative electrode plate and the diaphragm in the middle to form a battery cell.

In some embodiments of the present invention, the assembling further comprises:
The positive electrode plate is led out from a positive electrode tab;
The negative electrode plate is led out from a negative electrode tab;
The battery cell, the positive electrode tab, the negative electrode tab and the nickel tab are heat-sealed and fixed with an aluminum-plastic casing film, subjected to liquid injection, aging and formation, and then fully charged;
The copper wire is completely wrapped by the diaphragm on its surface in the battery cell.

In some embodiments of the present invention, the lithium plating method for reference electrode in lithium-ion supercapacitor of the present invention has the following steps:

### (1) Assembling:

Wrapping a copper wire with a diameter ranging from 10 to 50 µm and a length ranging from 80 to 100mm completely with a folded diaphragm, and fixing it with an adhesive tape to obtain a reference electrode to be plated with lithium, wherein the folded diaphragm has a bottom end longer than the copper wire by 10 to 20 mm and a width wider than the copper wire by 10 to 20 mm.

Alternately stacking the positive electrode plate and the negative electrode plate and separating the positive electrode plate from the negative electrode plate with the diaphragm, placing the reference electrode to be plated with lithium between the negative electrode plate and the diaphragm in the middle to form a battery cell.
The positive electrode plate is led out from a positive electrode tab;
The negative electrode plate is led out from a negative electrode tab;
The copper wire in the reference electrode to be plated with lithium is located between the positive electrode tab and the negative electrode tab and is led out from the upper end of the battery cell with a leading length ranging from 30 to 50 mm. This copper wire is attached to the outermost diaphragm with adhesive tape, so as to fix the reference electrode to be plated with lithium while avoiding causing unnecessary lithium-ion loss to some lithium plating on the copper wire on the battery cell. The copper wire led out from the battery cell is welded with nickel tab to enhance the ability to resist electrical signal interference, and the nickel tab is flush with the positive electrode tab and the negative electrode tab in length.

Each tab as described above and the battery cell are heat-sealed and fixed with aluminum-plastic casing film, then subjected to liquid injection, aging and formation, and then fully charged, obtaining a lithium-ion supercapacitor with reference electrode to be plated with lithium.

### (2) Performing lithium plating on the reference electrode with a constant current method:

Firstly, the negative electrode tab and the nickel tab are connected to the electrochemical workstation, and when performing lithium plating, three stages of currents that decrease stepwise are used to perform lithium plating. Specifically, the lithium plating is completed by performing lithium plating for 2 to 4 hours at a constant current ranging from 0.2 to 0.1mA, then performing lithium plating for 2 to 4 hours at a constant current ranging from 0.1 to 0.05mA, and then performing lithium plating for 4 to 8 hours at a constant current ranging from 0.05 to 0.01mA.

Some embodiments of the present invention further provide a lithium-ion supercapacitor with three-electrode evaluation system, which is prepared with the lithium plating method as described above.

Some embodiments of the present invention further provide an evaluation method for the capacity design of hard carbon negative electrode or N/P ratio design in the lithium-ion supercapacitor, wherein the reference electrode in lithium-ion supercapacitor is prepared with the lithium plating method as described above.

If specific technology or conditions are not specified in the examples, the examples are carried out according to the technology or conditions described in the literature in the art or according to product specification. The used reagents or instruments that do not indicate the manufacturer are conventional products that are commercially available through commercial channels.

Before assembling, the copper wire in the examples of the present invention undergoes pre-treatment to remove oxides on the surface thereof, and the pre-treatment includes soaking the copper wire in concentrated sulfuric acid for 3 minutes or polishing the copper wire with abrasive paper.

The positive electrode plate suitable for the present invention includes, but is not limited to: the positive electrode plate is formed by a positive electrode material composed of a mixture of lithium iron phosphate, conductive carbon material, porous carbon material, and polyvinylidene fluoride adhesive, wherein the conductive carbon material can be composed of one or more of linear carbon materials (carbon nanotubes, carbon fibers, etc.) and granular carbon materials (acetylene black, carbon black);

The negative electrode plate suitable for the present invention includes, but is not limited to: the negative electrode plate is formed by a negative electrode material composed of hard carbon, conductive carbon material, thickener (CMC), and SBR adhesive, wherein the conductive carbon material can be composed of one or more of linear carbon materials (carbon nanotubes, carbon fibers, etc.) and granular carbon materials (conductive graphite, carbon black).

Hereunder preferable embodiments proposed by the present invention will be exemplified.

### Example 1

A lithium plating method for reference electrode in lithium-ion supercapacitor has the following steps:

### (1) Assembling:

As shown in FIG. 1, a copper wire 8 with a diameter of 20 µm and a length of 80 mm is completely wrapped with a folded diaphragm 7 to obtain the reference electrode to be plated with lithium, wherein the folded diaphragm has a bottom end longer than the copper wire by 10 mm and a width wider than the copper wire by 20 mm.

Alternately stacking the positive electrode plate and the negative electrode plate and separating the positive electrode plate from the negative electrode plate with the diaphragm, placing the reference electrode to be plated with lithium between the negative electrode plate and the diaphragm in the middle to form a battery cell 1.

The positive electrode plate is led out from a positive electrode tab 5;

The negative electrode plate is led out from a negative electrode tab 3;

The copper wire in the reference electrode to be plated with lithium is located between the positive electrode tab and the negative electrode tab and is led out from the upper end of the battery cell with a leading length of 40 mm. This copper wire is attached to the outermost diaphragm with adhesive tape 6, so as to fix the reference electrode to be plated with lithium while avoiding causing unnecessary lithium-ion loss to some lithium plating on the copper wire on the battery cell. The copper wire led out from the battery cell is welded to nickel tab 4, and the nickel tab is flush with the positive electrode tab and the negative electrode tab in length.

Each tab as described above and the battery cell are heat-sealed and fixed with aluminum-plastic casing film 2, then subjected to liquid injection, aging and formation, and then the lithium-ion supercapacitor is fully charged at a rate of 0.5C, obtaining a lithium-ion supercapacitor with reference electrode to be plated with lithium.

### (2) Performing lithium plating on the reference electrode with a constant current method:

Firstly, the negative electrode tab and the nickel tab are connected to the electrochemical workstation, and when performing lithium plating, three stages of currents that decrease stepwise are used for continuous lithium plating. Specifically, the lithium plating is completed by performing lithium plating for 2 hours at a constant current of 0.15 mA, then performing lithium plating for 2 hours at a constant current of 0.07mA, and then performing lithium plating for 4 hours at a constant current of 0.03 mA.

### Example 2

A lithium plating method for reference electrode in lithium-ion supercapacitor has substantially the same steps as those of Example 1 except for different parameters during continuous lithium plating. Specifically, the lithium plating is completed by plating lithium for 2 hours at a constant current of 0.2mA, then plating lithium for 2 hours at a constant current of 0.1 mA, and then plating lithium for 4 hours at a constant current of 0.05 mA.

### Example 3

A lithium plating method for reference electrode in lithium-ion supercapacitor has substantially the same steps as those of Example 1 except for different parameters during continuous lithium plating. Specifically, the lithium plating is completed by plating lithium for 4 hours at a constant current of 0.1mA, then plating lithium for 4 hours at a constant current of 0.05 mA, and then plating lithium for 8 hours at a constant current of 0.01 mA.

### Comparative Example 1

A lithium plating method for reference electrode in lithium-ion supercapacitor has substantially the same steps as those of Example 1 except for different parameters during continuous lithium plating. Specifically, the lithium plating is completed by plating lithium for 8 hours at a constant current of 0.1mA.

### Comparative Example 2

A lithium plating method for reference electrode in lithium-ion supercapacitor has substantially the same steps as those of Example 1 except for different parameters during continuous lithium plating. Specifically, the lithium plating is completed by plating lithium for 8 hours at a constant current of 0.01mA.

The lithium-ion supercapacitors with three electrodes obtained from the above Examples and Comparative Examples are subjected to a charge-discharge cycle test. The test procedure is as follows: the lithium-ion supercapacitor is charged to 4.0 V with a constant current of 1C and is allowed to stand for 1 min, then the lithium-ion supercapacitor is discharged to 2.8V with a constant current of 1C and allowed to stand for 1min. The above steps are one charge-discharge cycle.

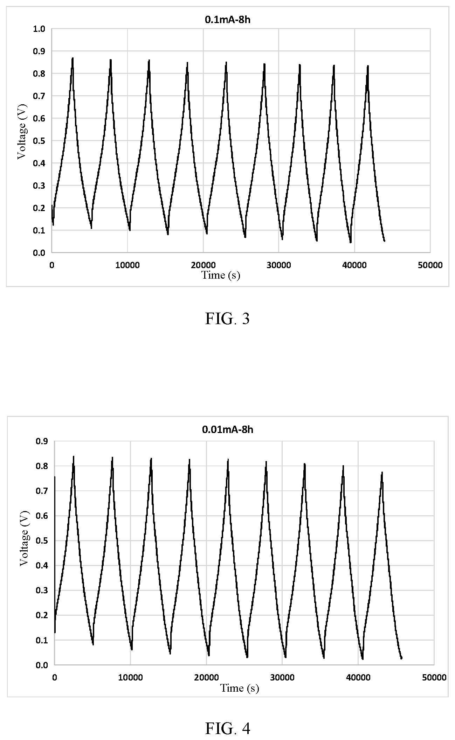

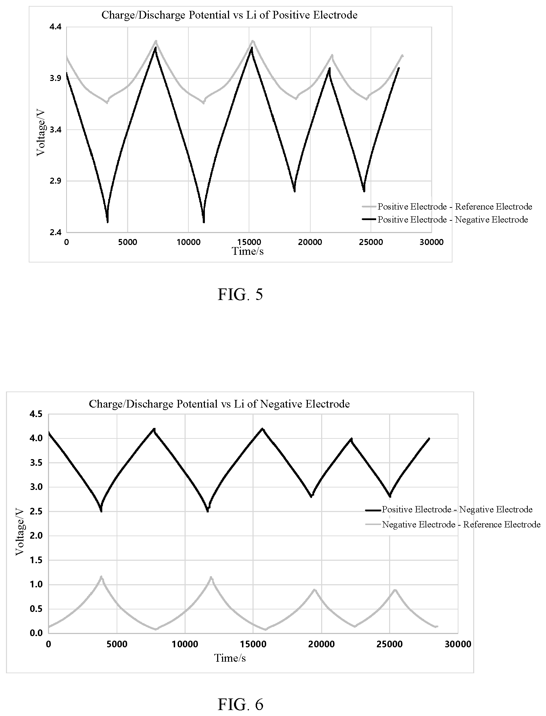

The potentials of negative electrode versus reference electrode during 9 charge-discharge cycles are recorded. The results of Example 1 are shown in FIG. 2, the results of Comparative Example 1 are shown in FIG. 3, and the results of Comparative Example 2 are shown in FIG. 4. Moreover, the changes of potential versus lithium of the positive and negative electrodes when charging and discharging in the voltage range of 4.2-2.5V and 4.0-2.8V are monitored in real time through a voltmeter. The results of Example 1 are shown in FIGS. 5-6.

From FIGS. 2-4, it can be seen that the lithium-ion supercapacitor of Example 1 has a relatively stable potential of negative electrode vs. reference electrode during 9 charge-discharge cycles, wherein there is almost no change in the first 7 cycles, and due to the gradual dissolution of the lithium plating layer on the reference electrode in the electrolyte during charge-discharge cycles, there is a large deviation in the data of the last two cycles. However, for the lithium-ion supercapacitor in Comparative Example 1, it is found that there is a large deviation in the data after three cycles of the 9 charge-discharge cycles, indicating that the lithium plating layer obtained by continuous lithium plating with high current is not dense enough and is prone to detachment during the charge-discharge cycles, resulting in reduced test stability. With regard to the lithium-ion supercapacitor of Comparative Example 1, after 9 charge-discharge cycles, it is found that the test result of the first charge-discharge cycle has a large deviation from the test results in the Example 2 and Comparative Example 1, the upper limit voltage and the lower limit voltage are lower. At the same time, after one cycle, the data begins to show significant deviations, this is because the current for continuous lithium plating is too small, and the lithium plating layer on the surface of copper wire is prone to be thin and uneven, and falls off quickly during charge-discharge cycles, resulting in a significant decrease in test reliability and stability.

From FIGS. 5-6, it can be seen that the lithium-ion supercapacitor of Example 1 can be charged or discharged normally, the potential versus lithium of the positive electrode ranges from 3.70 to 4.26V when the lithium-ion supercapacitor is charged or discharged in the voltage range of 4.2 to 2.5 V, the potential versus lithium of the negative electrode ranges from 0.13 to 1.11 V, which falls within the voltage range of the hard carbon slope zone, and meets the design expectations. However, the upper limit voltages of the positive electrode and the negative electrode still can be adjusted, and the hard carbon capacity can be appropriately increased to reduce the potential versus lithium. This indicates that adopting the three-electrode evaluation method of the present invention helps to analyze the rationality of the capacity design of hard carbon negative electrode and N/P ratio design of lithium supercapacitor.

Finally, it should be noted that the above embodiments are only used to illustrate the technical solutions of the present invention, rather than limit it. Although the present invention has been described in detail with reference to the aforementioned embodiments, those of ordinary skills in the art should understand that they can still modify the technical solutions described in the aforementioned embodiments, or make equivalent replacement to some technical features therein. These modifications or replacements do not make the essence of corresponding technical solutions depart from the spirit and scope of technical solutions of embodiments of the present invention.

## Claims

1. A lithium plating method for reference electrode in lithium-ion supercapacitor, with the reference electrode being made of copper wire, **characterized in that** the lithium plating method comprises performing continuous lithium plating on the copper wire with three stages of currents that decrease stepwise:
said continuous lithium plating comprises plating lithium at a first constant current, then plating lithium at a second constant current, and then plating lithium at a third constant current, wherein the current values of the first constant current, the second constant current and the third constant current decrease in sequence.

2. The lithium plating method for reference electrode in lithium-ion supercapacitor according to claim 1, **characterized in that** said continuous lithium plating comprises plating lithium at a constant current ranging from 0.2 to 0.1mA for more than 2 hours, then plating lithium at a constant current ranging from 0.1 to 0.05mA for more than 2 hours, and then plating lithium continuously at a constant current ranging from 0.05 to 0.01mA for more than 4 hours.

3. The lithium plating method for reference electrode in lithium-ion supercapacitor according to claim 1 or claim 2, **characterized in that** the copper wire has a diameter ranging from 10 to 50 µm and a length ranging from 80 to 100 mm.

4. The lithium plating method for reference electrode in lithium-ion supercapacitor according to any of claims 1-3, **characterized in that** the lithium-ion supercapacitor including a positive electrode plate, a negative electrode plate and copper wire is first assembled and then fully charged, and then lithium ions on the negative electrode plate are used as lithium source for performing said continuous lithium plating.

5. The lithium plating method for reference electrode in lithium-ion supercapacitor according to claim 4, **characterized in that** the assembling comprises: welding the copper wire to a nickel tab;
the nickel tab and negative electrode tab led out from the negative electrode plate are connected to an electrochemical workstation to perform continuous lithium plating.

6. The lithium plating method for reference electrode in lithium-ion supercapacitor according to claim 4 or claim 5, **characterized in that** the copper wire is completely wrapped with a diaphragm, and then the assembling is performed.

7. The lithium plating method for reference electrode in lithium-ion supercapacitor according to claim 6, **characterized in that** the assembling comprises: alternately stacking the positive electrode plate and the negative electrode plate and separating the positive electrode plate from the negative electrode plate with diaphragm, placing the copper wire completely wrapped with the diaphragm between the negative electrode plate and the diaphragm in the middle to form a battery cell.

8. The lithium plating method for reference electrode in lithium-ion supercapacitor according to claim 7, **characterized in that** the assembling further comprises:
the positive electrode plate is led out from a positive electrode tab;
the negative electrode plate is led out from a negative electrode tab;
the battery cell, the positive electrode tab, the negative electrode tab and the nickel tab are heat-sealed and fixed with aluminum-plastic casing film, then subjected to liquid injection, aging and formation, and then fully charged;
the copper wire is completely wrapped by the diaphragm on its surface in the battery cell.

9. A lithium-ion supercapacitor with a three-electrode evaluation system, **characterized in that** the lithium-ion supercapacitor is prepared with the lithium plating method according to any of claims 1-8.

10. An evaluation method for capacity design of hard carbon negative electrode or N/P ratio design in lithium-ion supercapacitor, **characterized in that** the reference electrode in lithium-ion supercapacitor is prepared with the lithium plating method according to any of claims 1-8.
